# FASCICULE DE BREVET EUROPEEN

(11) **EP 1 156 713 B1**
(45) Date de publication et mention de la délivrance du brevet: **02.07.2003**
(21) Numéro de dépôt: 00906447.8
(22) Date de dépôt: 21.02.2000
(51) Int. Cl.: A01D 45/26

(54) **MACHINE DE RECOLTE DE LAITUES CULTIVEES EN PLANCHE SUR PLUSIEURS RANGS ADJACENTS**
ERNTEMASCHINE FÜR IN MEHRREIHIGEM PLANZENBEET KULTIVIERTEN FELDSALAT
HARVESTING MACHINE FOR LETTUCE CULTIVATED IN BEDS OVER SEVERAL ADJACENT ROWS

(30) Priorité: 25.02.1999 FR 9902537
(43) Date de publication de la demande: 28.11.2001
(73) Titulaire: Ateliers de Claire Fontaine, 44450 La Chapelle Basse Mer (FR)
(72) Inventeur: BOYELDIEU, Luc, F-44000 Nantes (FR); SAUVETRE, Jacques, 44470 Carquefou (FR)
(74) Mandataire: Catherine, Alain
(86) Numéro de dépôt international: FR0000433
(87) Numéro de publication internationale: WO00049849

(56) Documents cités:
- EP-A- 0 613 616
- FR-A- 2 694 999
- US-A- 4 261 163
- US-A- 4 944 141
- US-A- 4 967 545
- US-A- 5 799 474

## Description

La présente invention concerne une machine de récolte de laitues cultivées en planche, sur plusieurs rangs adjacents.

Il existe des machines pour la récolte de plantes potagères comme par exemple la récolte des épinards (FR-2 446 056), la récolte des tomates (US-4 261 163), les concombres (US-4 944 141) ou encore, pour la récolte de la mâche (FR-2 694 999 et FR-2 702 125). Chaque type de culture présente ses particularités et la laitue n'échappe pas à cette règle. En effet la laitue doit être découpée au niveau de son pied (ou collet), et quelles que soient les variétés, cette opération de découpe requiert un effort important.

La présente invention propose une machine qui permet une récolte rapide et efficace de la laitue cultivée sur planche, c'est à dire-de la laitue qui est repiquée à partir de mini mottes et qui se développe sur plusieurs rangs, quatre rangs par exemple, parallèles entre eux.

Cette culture peut également s'effectuer sur billon c'est à dire avec seulement un ou deux rangs.

La machine selon l'invention est constituée d'un châssis porteur comportant des roues de guidage et/ou de propulsion, lequel châssis est équipé de moyens du genre tapis ou autre pour le parage manuel ou la mise en conteneurs ou sur une remorque, des laitues découpées, lequel châssis soutient, à sa partie avant une tête de récolte qui comprend :
- des moyens de découpe du pied de la laitue, au niveau de son collet,
- des moyens d'élévation et de convoyage desdites laitues sur ledit tapis de parage ou autre, et
- des moyens pour régler globalement la position desdits moyens de découpe, par rapport au sol, lesquels moyens de réglage comprennent des palpeurs situés de part et d'autre de ladite tête de récolte, à proximité des moyens de découpe, et un dispositif de commande interposé entre lesdits palpeurs et lesdits moyens de réglage; ces moyens de découpe sont constitués de plusieurs organes de découpe disposés côte à côte, en correspondance avec chaque rang de laitues, lesquels organes de découpe sont d'une part, animés d'un mouvement régulier de va-et-vient et, d'autre part, pour une partie au moins d'entre eux, munis de moyens pour régler individuellement leur position en hauteur par rapport au sol afin d'adapter cette position en fonction de l'état de la surface de la planche de culture.

Selon une caractéristique avantageuse, les organes de découpe sont portés par une poutre transversale et horizontale commune, cette poutre étant munie de moyens pour permettre d'une part, le réglage de l'écartement desdits organes entre eux et, d'autre part, un mouvement de pivotement de ces derniers autour de l'axe de ladite poutre, sous l'effet des moyens de réglage associés à chacun d'eux.

Selon une caractéristique avantageuse, les moyens de réglage des organes de découpe sont constitués d'actionneurs manoeuvrables à distance, du genre vérins, chacun de ces vérins déplace verticalement un petit rail disposé parallèlement et à l'arrière de la poutre, lequel rail sert de guide à l'extrémité d'un bras de l'organe de découpe et il est situé en arrière de ladite poutre, laquelle extrémité, munie d'un galet par exemple, est maintenue de façon élastique en contact avec ledit rail de guidage.

Selon une caractéristique avantageuse, les différents vérins de manoeuvre des organes de découpe sont actionnables soit individuellement à distance, par l'intermédiaire d'une commande manuelle à disposition de l'opérateur ou d'une commande automatique, soit ensemble par une commande unique à disposition dudit opérateur.

Selon une caractéristique avantageuse, les moyens d'élévation des laitues découpées sont constitués de deux tapis sans fin du type à barrettes formant un couloir à forte pente dont l'angle, par rapport au sol, est de l'ordre de 60 °. Cette disposition permet de réduire l'encombrement de la tête de récolte située en porte-à-faux à l'avant de la machine.

Selon une caractéristique avantageuse, le tapis sans fin situé en amont, est soutenu et suspendu par des moyens élastiques qui lui confèrent une possibilité de mouvement pour la largeur du couloir selon les besoins afin d'éviter de détériorer les laitues découpées et emmenées dans ledit couloir par les tapis.

Selon une caractéristique avantageuse, le tapis amont comporte des barrettes qui sont garnies d'un matériau souple et tendre du genre tube en caoutchouc cellulaire ou autre.

Les organes de découpe et le couloir de convoyage sont disposés sur un bâti qui est relié au châssis de la machine par trois points disposés en triangle :
- un point d'ancrage central de type rotulien disposé sur le châssis de la machine,
- deux points latéraux situés en amont de l'ancrage rotulien, au niveau desquels points s'effectue le réglage de la position de la poutre porteuse des organes de découpe; par rapport au sol sous l'effet de vérins appropriés.

Selon une caractéristique avantageuse, les vérins de réglage sont reliés au bâti par l'intermédiaire d'une structure en forme d'étrier qui s'étend à l'avant des châssis, articulée sur ce dernier autour d'un axe transversal et horizontal, lequel étrier est lui-même relié au châssis par le biais d'au moins un vérin qui permet de manoeuvrer à volonté la tête de récolte.

L'invention sera encore détaillée à l'aide de la description suivante et des dessins annexés donnés à titre indicatif, et dans lesquels :
- la figure 1 représente schématiquement et de façon partielle, les éléments essentiels de la machine de récolte selon l'invention ;
- la figure 2 représente en perspective et de façon schématique, les couteaux de découpe de la salade et les moyens de commande et de réglage de ces couteaux.

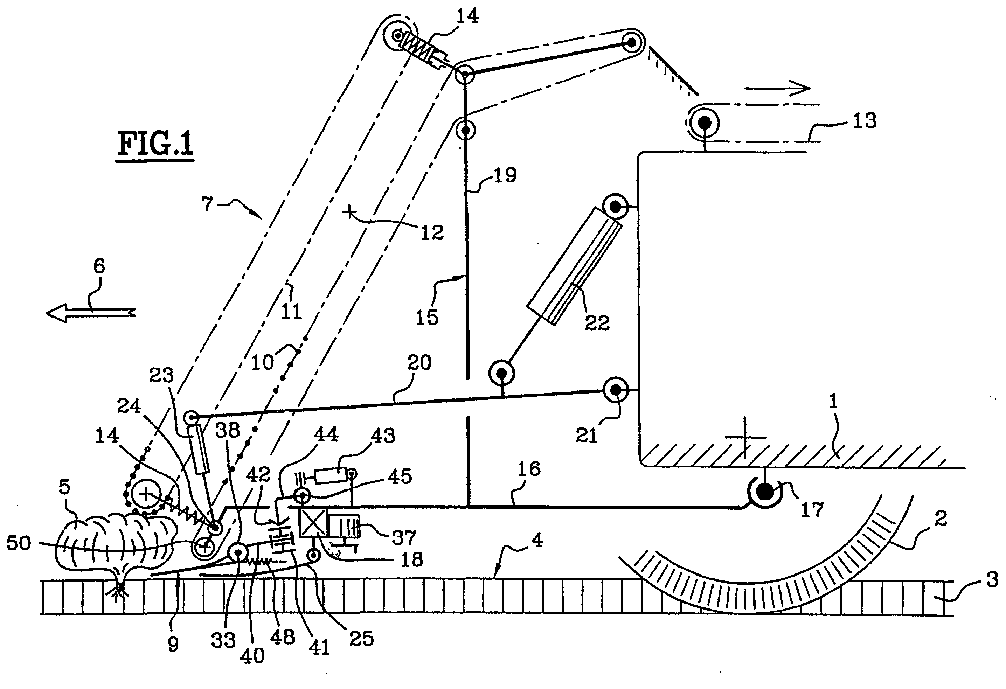

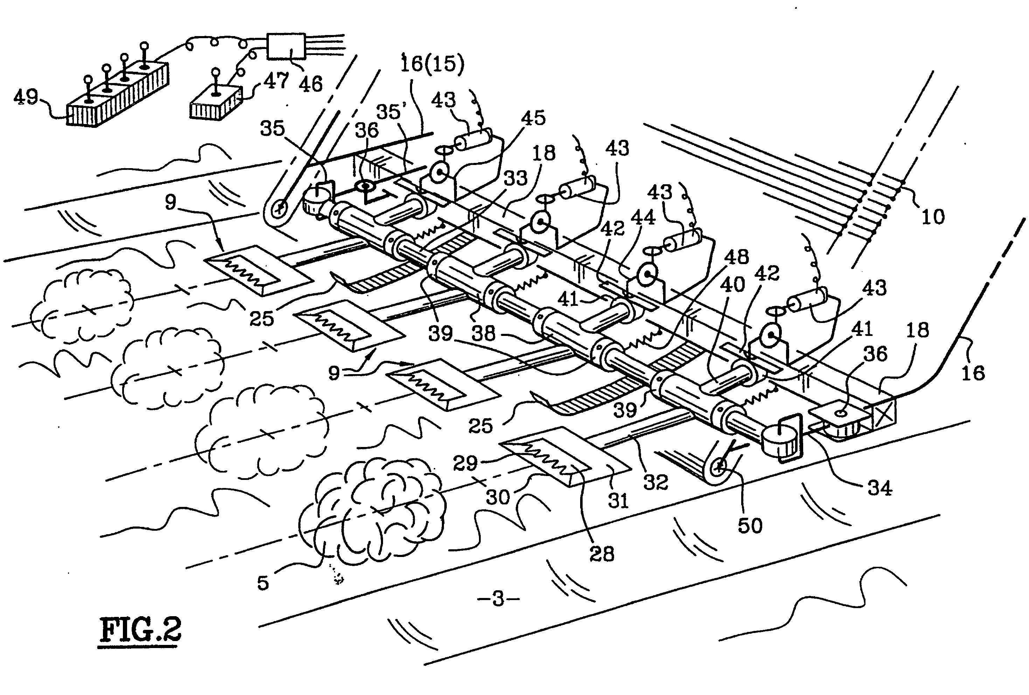

La portion de machine de récolte représentée figure 1, comprend un châssis 1 porté par des roues 2 qui sont motrices et/ou directrices. Cette machine, du type automotrice roule dans les passe-pieds 3 disposés de part et d'autre de la planche de culture 4 sur laquelle poussent des laitues 5. Ces laitues 5 sont cultivées et se développent en lignes, sur plusieurs rangs adjacents comme représenté figure 2.

Le châssis 1 pousse, dans le sens indiqué par la flèche 6, une tête de récolte 7 qui comprend - des organes de découpe 9 en forme de couteaux qui seront détaillés plus loin en liaison avec la figure 2, et - des moyens de convoyage qui sont constitués d'une paire de tapis sans fin : un tapis principal 10 dont l'extrémité inférieure est située en aval de la partie active des organes de découpe 9 et un second tapis 11 qui précède et couvre le tapis 10, lesquels tapis forment entre eux un couloir 12 pour convoyer les laitues découpées vers un autre tapis 13 situé sur le châssis 1. Ce tapis 13 permet par exemple, avec l'aide d'opérateurs présents sur la machine de parer les laitues ou de les disposer dans des conteneurs en vue de les récupérer au moyen d'une remorque non représentée.

Les tapis 10 et 11 sont du type à barrettes. Le tapis 10 comporte des barrettes dont l'espacement permet notamment de laisser passer les détritus et la terre qui retombent au sol.

Le tapis 11 comporte des barrettes qui sont habillées avec de la mousse de façon à éviter de blesser les feuilles de laitues. Cette protection peut être constituée de tubes en caoutchouc cellulaire ou autre.

De plus, ce tapis amont 11 est monté sur des moyens de suspension élastique 14 qui lui permettent de réagir et de se positionner automatiquement à distance du tapis 10 sous la pression des laitues afin d'éviter un écrasement de ces dernières et une détérioration.

On remarque que le couloir 12 défini par les deux tapis 10 et 11 et dans lequel sont convoyées les laitues, est fortement incliné par rapport au sol. L'angle de ce couloir par rapport au sol est au moins de l'ordre de 60°.

Cette forte inclinaison du couloir permet d'avoir une tête de récolte relativement compacte, en porte-à-faux à l'avant du châssis 1.

Cette tête de récolte est aménagée autour d'un bâti 15 qui comprend comme schématisé figure 1, une structure horizontale 16. Cette structure 16 est en forme de Vé. Elle part d'un point rotulien 17 situé sous le châssis 1 au niveau de l'essieu des roues avant 2, et ses branches s'étendent latéralement vers l'avant de la machine, formant deux autres points de soutien du bâti 15.

Une traverse 18 s'étend transversalement entre les branches latérales de la structure 16 derrière le tapis 10. Cette traverse 18 porte les organes de découpe 9 et les différents moyens de commande de ces derniers détaillés ci-après.

Les tapis 10 et 11 sont portés par le bâti 15 et en particulier par les extrémités de la structure 16 et par la partie supérieure de la structure 19 dudit bâti 15.

Ce bâti 15 est lui-même porté par une structure en forme d'étrier 20 qui est articulée sur un axe horizontal et transversal 21 situé à l'avant du châssis 1.Cet étrier est mobile autour de l'axe 21 sous l'effet d'au moins un vérin 22 ancré sur le châssis 1 et il comporte à chacune de ses extrémités avant, un vérin 23 qui est relié et qui soutient chacune des extrémités latérales avant 24 de la structure horizontale 16 en forme de Vé.

Le vérin principal 22 permet de lever ou de mettre en position la tête de récolte, rapidement, en bout de parcelle par exemple. Les vérins 23 disposés de chaque côté de la tête de récolte, permettent de maintenir la position de ladite tête par rapport au sol et en particulier les parties actives des organes de découpe 9, pour obtenir un sectionnement des pieds des laitues 5 au niveau de leur collet.

Les vérins 23 sont mis en oeuvre par un dispositif de commande non représenté qui reçoit des informations à partir de plusieurs palpeurs 25 situés latéralement, par exemple entre les organes de découpe 9, près de leur extrémité amont. Les mouvements du ou des palpeurs 25 sous l'effet du mouvement de la machine qui roule dans les passe-pieds 3, permettent de corriger la position du bâti 15 et donc celle des organes de découpe 9, pour maintenir ces derniers dans une position adéquate par rapport au niveau du sol. Cette correction, généralement de faible amplitude, s'effectue au moyen des vérins 23, l'un ou l'autre ou les deux donnant une impression de déhanchement du fait du mouvement qui s'effectue autour du pivot à rotule 17.

Ce système de réglage de la hauteur des organes de découpe 9, en fonction des variations de niveau détectées par les palpeurs 25, est détaillé dans les documents précités et en particulier dans le brevet US-4 944 141 et dans le brevet FR-2 702 125. Les palpeurs 25 sont articulés et associés à la traverse 18.

Compte-tenu des efforts que requiert la découpe du collet d'une laitue, il est nécessaire de disposer de moyens de découpe de bonne résistance et c'est pourquoi, comme représenté figure 2, les laitues sont découpées au niveau de chaque rang, par un organe individuel 9, situé dans l'axe dudit rang.

Les organes de découpe 9 sont constitués d'une lame de couteau 30, en acier approprié, tendue entre les branches d'une structure 31 en forme de U qui est elle-même située à l'extrémité avant d'un manche 32.

Chaque lame 30 comporte une arête de découpe qui est perpendiculaire au sens d'avancement de la machine, et, derrière l'arête, une sorte de peigne 29 permet de secouer légèrement le pied de laitue et de décrocher la terre, ou le sable, avant la prise en charge de ladite laitue par les tapis convoyeurs 10 et 11. Le tapis convoyeur 10 est simplement esquissé sur la figure 2 alors que le tapis 11 n'est pas représenté pour ne pas surcharger cette figure.

La partie centrale 28 située entre la lame 30 et la structure en U 31, est creuse pour permettre à la terre ou au sable qui se détache du pied de laitue, de retomber au sol.

Tous les organes de découpe 9 sont montés sur une poutre rigide 33 qui s'étend transversalement sur la largeur d'au moins une planche. Cette poutre 33 est portée par des biellettes 34 d'un côté et 35 de l'autre. Ces biellettes 34, 35 sont articulées chacune sur l'extrémité de la poutre 33 et également sur un palier 36 solidaire de la traverse 18 qui s'étend entre les branches de la structure 16 qui est en forme de Vé.

La biellette 35 comporte une branche complémentaire 35' qui s'étend au-delà du palier 36, et qui est reliée à des moyens de commande de la poutre 33.

Cette biellette 35' permet, avec des moyens appropriés, d'animer la poutre 33 d'un mouvement de va-et-vient transversal, lequel mouvement est transmis à l'ensemble des organes de découpe 9 et permet une véritable découpe de chaque collet de laitue par la lame 30.

Ce mouvement de va-et-vient est par exemple obtenu par un moteur hydraulique 37 comme représenté figure 1, lequel moteur hydraulique 37 est muni d'un plateau manivelle et il est fixé au bâti 15 et en particulier à la traverse 18 de la structure 16 en forme de Vé.

La poutre 33 est par exemple constituée d'une barre cylindrique. Les extrémités de chacun des manches 32 des organes de découpe sont par exemple constituées de douilles 38 enfilées sur la poutre 33. Ces douilles 38 sont maintenues en position sur la poutre 33 au moyen de bagues 39 disposées de part et d'autre, lesquelles bagues sont verrouillables par vis ou autre et leur position peut être modifiée à volonté pour régler l'emplacement des organes de découpe 9 sur ladite poutre, en fonction de l'écart entre les rangs de laitues.

Ces douilles 38 sont cylindriques et permettent en plus une articulation de chacun des manches 32 des organes de découpe 9, autour de l'axe de la poutre 33.

Cette articulation permet de déplacer verticalement les lames 30 des organes de découpe 9, afin d'ajuster leur position par rapport au sol et en particulier par rapport au collet des laitues à découper, selon l'état de la surface de la planche, laquelle planche peut être convexe, concave selon le cas, ou tout simplement irrégulière.

Chaque manche 32 se prolonge en aval de la poutre 33, par un bras 40. Ce bras 40 est situé dans le prolongement du manche 32 et il est solidaire de la douille 38. De préférence, ce bras 40 comporte à son extrémité, un galet 41, lequel galet roule sur un petit rail 42 qui s'étend transversalement et à l'horizontale au-dessus dudit galet.

Des moyens en forme de ressorts 48, permettent de maintenir les galets 41 en appui sur les rails 42 correspondants. Chaque rail 42 est susceptible de se déplacer en hauteur, au moyen d'un actionneur ou organe de manoeuvre du genre vérin 43, de préférence électrique.

Ces vérins 43 sont montés sur le bâti 15 et en particulier sur la traverse 18 dudit bâti. Le rail 42 est associé à une structure 44 en forme d'équerre qui est articulée autour d'un axe horizontal et transversal 45 monté sur la traverse 18..

Les différents vérins 43 sont reliés à un boîtier électrique 46, lequel boîtier est lui-même relié à une première commande 47 qui permet à l'opérateur de manoeuvrer globalement l'ensemble desdits vérins pour régler la position des lames 30 des différents organes de découpe 9, toutes ensemble, par rapport au sol.

Les vérins 43 sont également connectés par l'intermédiaire du boîtier 46, à des moyens de commande individuels 49, chaque interrupteur par exemple est associé à un vérin 43 pour permettre à l'opérateur de régler individuellement la position de chaque lame de couteau, par rapport au sol, en fonction de la forme de la planche.

Ces vérins 43 peuvent également être actionnés de façon automatique par le biais d'un boîtier de commande électrique qui reçoit des informations à partir de palpeurs non représentés, situés par exemple derrière chaque organe de découpe 9.

On retrouve, figure 1, les vérins 43 dont un seul apparaît sur la figure, lequel vérin 43 est solidaire de la traverse 18 du bâti 15. Ce vérin 43 manoeuvre la pièce 44 en forme d'équerre qui est articulée sur un axe 45, et cette pièce 44 comporte à l'extrémité de l'une de ses branches, le rail 42 sur lequel roule le galet 41 qui est lui même situé à l'extrémité arrière du bras 40 de l'organe de découpe 9. Le bras 40 est solidaire de la douille 38, laquelle douille est articulée sur la poutre 31. En avant de la douille 38, on trouve le manche 32 qui passe sous l'extrémité inférieure 50 du tapis convoyeur 10, avec, au bout dudit manche, la lame 30 qui est représentée en position de découpe du pied de la laitue 5.

## Revendications

1. Machine de récolte de laitues, constituée d'un châssis porteur muni de roues de guidage et/ou de propulsion, lequel châssis (1) est équipé de moyens du genre tapis (13) ou autre pour le parage manuel ou la mise en conteneurs des laitues découpées, lequel châssis soutient, à sa partie avant, une tête de récolte qui comprend:
- des moyens de découpe des pieds de laitues au niveau du collet,
- des moyens d'élévation et de convoyage desdites laitues découpées, vers ledit tapis (13) de parage ou autre,
- des moyens pour régler globalement la position desdits moyens de découpe par rapport au sol, lesquels moyens de réglage comprennent - des palpeurs (25) situés de part et d'autre de ladite tête de récolte à proximité des moyens de découpe, et - des moyens de commande associés auxdits moyens de réglage,
**caractérisée en ce que** les moyens de découpe sont constitués d'organes de découpe (9) disposés côte à côte, destinés à être placés en correspondance avec les rangs de laitues, lesquels organes de découpe étant d'une part animés d'un mouvement transversal régulier de va-et-vient par des moyens appropriés et, d'autre part, pour une partie au moins d'entre eux, munis de moyens (43) pour régler individuellement leur position en hauteur par rapport au sol, afin d'adapter cette position en fonction de l'état de la surface de la planche de culture.

2. Machine de récolte de laitues selon la revendication 1, **caractérisée en ce que** les organes de découpe (9) sont portés par une poutre (33) disposée transversalement et munie de moyens pour permettre d'une part, le réglage de l'écartement desdits organes (9) entre eux et, d'autre part, un mouvement de pivotement de ces derniers autour de l'axe de ladite poutre, sous l'effet des moyens de réglage de la position de chacun d'eux.

3. Machine de récolte de laitues selon la revendication 2, **caractérisée en ce que** les moyens de réglage des organes de découpe (9) sont constitués d'actionneurs manoeuvrables à distance, du genre vérins (43), chaque vérin permettant le déplacement en hauteur d'un rail (42) qui est disposé parallèlement derrière la poutre (33), lequel rail sert de guide à un galet (41) ou autre disposé à l'extrémité arrière d'un bras (40) constitutif de l'organe de découpe (9), lequel galet est maintenu de façon élastique en contact avec son rail (42).

4. Machine de récolte de laitues selon la revendication 3, **caractérisée en ce que** les différents vérins (43) sont actionnables soit individuellement à distance par l'intermédiaire d'une commande manuelle à disposition de l'opérateur, ou d'une commande automatique, soit ensemble par une commande unique à disposition dudit opérateur.

5. Machine de récolte selon l'une quelconque des revendications 1 à 4, **caractérisée en ce que** les moyens d'élévation des laitues découpées sont constitués d'une paire de tapis sans fin (10, 11) du type à barrettes qui délimitent un couloir (12) permettant le convoyage desdites laitues, lequel couloir est fortement incliné, faisant un angle de l'ordre de 60° par rapport au sol.

6. Machine de récolte de laitues selon la revendication 5, **caractérisée en ce que** ce tapis convoyeur amont (11) est soutenu et suspendu de façon élastique pour éviter de blesser et froisser les laitues découpées.

7. Machine de récolte de laitues selon la revendication 6, **caractérisée en ce que** le tapis amont (11) comporte des barrettes habillées de mousse et en particulier de manchons de mousse en matériau du genre caoutchouc cellulaire ou autre.

8. Machine de récolte selon l'une quelconque des revendications 1 à 7, **caractérisée en ce que** les organes.de découpe (9) et le couloir de convoyage sont disposés sur un bâti (15) qui est relié au châssis (1) par trois points disposés selon un triangle sensiblement horizontal: - un point d'ancrage (17) sur ledit châssis (1), de type rotulien, et - deux points latéraux (24) situés en amont de l'ancrage rotulien, au niveau desquels s'effectue le réglage de la position desdits organes de découpe (9) par rapport au sol, sous l'effet de vérins (23) appropriés.

9. Machine de récolte de laitues, selon la revendication 8, **caractérisée en ce que** les vérins de réglage (23) sont reliés au bâti (15) par l'intermédiaire d'une structure (20) en forme d'étrier qui s'étend à l'avant du châssis (1), articulée sur ce dernier autour d'un axe transversal et horizontal (21), lequel étrier est lui-même relié au châssis par le biais d'au moins un vérin (22) qui permet de manoeuvrer à volonté la tête de récolte.

## Patentansprüche

1. Salat-Erntemaschine, bestehend aus einem Tragrahmen, der mit Führungs- und/oder Antriebsrädern versehen ist, wobei dieser Rahmen (1) mit Mitteln von der Art eines Förderbands (13) oder dgl. für das manuelle Zurichten oder die Ablage der abgeschnittenen Salatpflanzen in Behältern versehen ist, und dieser Rahmen an seinem Vorderbereich einen Emtekopf trägt, der umfasst:
- Mittel zum Schneiden der Füße der Salatpflanzen auf der Höhe des Halses,
- Mittel zum Heben und Fördern der abgeschnittenen Salatpflanzen zum Förderband (13) für den Zuschnitt oder sonstiges,
- Mittel zur Gesamteinstellung der Position der Schneidmittel über dem Boden, wobei diese Einstellmittel umfassen:
Taster (25), die beiderseits des Erntekopfs in der Nähe der Schneidmittel angeordnet sind, und Steuermittel, die mit diesen Einstellmitteln verbunden sind,
**dadurch gekennzeichnet, dass** die Schneidmittel aus Schneidorganen (9) bestehen, die nebeneinander angeordnet und bestimmt sind, den Salatpflanzen entsprechend plaziert zu werden, wobei diese Schneidorgane zum einen durch geeignete Mittel in eine regelmäßige, hin- und hergehende Querbewegung versetzt werden, und zum anderen mindestens ein Teil davon mit Mitteln (43) ausgerüstet ist, um deren Position über dem Boden einzeln einzustellen, damit diese Position dem Oberflächenzustand der Anbaufläche entsprechend angepaßt werden kann.

2. Salat-Erntemaschine nach Anspruch 1, **dadurch gekennzeichnet, dass** die Schneidorgane (9) von einem Träger (33) getragen werden, der quer angeordnet und mit Mitteln versehen ist, um zum einen die Einstellung des Abstands dieser Organe (9) voneinander und zum anderen eine Drehbewegung letzterer um die Achse dieses Trägers unter der Wirkung der Mittel zur Einstellung jedes einzelnen davon zu erlauben.

3. Salat-Erntemaschine nach Anspruch 2, **dadurch gekennzeichnet, dass** die Einstellmittel der Schneidorgane (9) aus Stellantrieben vom Typ fern betätigbarer Zylinder (43) bestehen, wobei jeder Zylinder die Höhenverstellung einer Schiene (42) erlaubt, die parallel hinter dem Träger (33) angeordnet ist, wobei diese Schiene einer Laufrolle (41) oder dgl. als Führung dient, die am hinteren Ende eines Arms (40) angeordnet ist, der Bestandteil des Schneidorgans (9) ist, und diese Laufrolle auf elastische Weise mit ihrer Schiene (42) in Kontakt gehalten wird.

4. Salat-Erntemaschine nach Anspruch 3, **dadurch gekennzeichnet, dass** die verschiedenen Zylinder (43) entweder einzeln mittels einer manuellen Steuerung, die dem Bediener zur Verfügung steht, oder durch eine automatische Steuerung oder zusammen mittels einer einzelnen Steuerung, die dem Bediener zur Verfügung steht, fern betätigt werden können.

5. Salat-Erntemaschine nach einem der Ansprüche 1 bis 4, **dadurch gekennzeichnet, dass** die Mittel zum Heben der abgeschnittenen Salatpflanzen aus einem Paar Endlosbändern (10, 11) mit Querstäben bestehen, die eine Förderrinne (12) begrenzen, welche die Förderung der Salatpflanzen erlaubt, wobei diese Förderrinne stark geneigt ist und zum Boden einen Winkel in der Größenordnung von 60° bildet.

6. Salat-Erntemaschine nach Anspruch 5, **dadurch gekennzeichnet, dass** dieses Aufwärtsförderband (11) auf elastische Weise getragen wird und aufgehängt ist, um eine Schädigung und Quetschung der abgeschnittenen Salatpflanzen zu vermeiden.

7. Salat-Erntemaschine nach Anspruch 6, **dadurch gekennzeichnet, dass** das Aufwärtsförderband (11) Querstäbe umfasst, die mit Schaumstoff umkleidet sind, und insbesondere mit Schaumstoffhüllen aus einem Material wie z.B. Schaumgummi oder dgl.

8. Salat-Erntemaschine nach einem der Ansprüche 1 bis 7, **dadurch gekennzeichnet, dass** die Schneidorgane (9) und die Förderrinne auf einem Gestell (15) angeordnet sind, das mit dem Rahmen (1) an drei Punkten verbunden ist, die ein im wesentlichen horizontales Dreieck bilden: - einem Verankerungspunkt (17) vom Typ Drehgelenk an dem Rahmen (1) und zwei seitlichen Punkten (24), die vor der Gelenkverankerung angeordnet sind, auf deren Höhe die Einstellung der Position der Schneidorgane (9) über dem Boden mit Hilfe geeigneter Zylinder (23) durchgeführt wird.

9. Salat-Erntemaschine nach Anspruch 8, **dadurch gekennzeichnet, dass** die Einstellzylinder (23) über einen bügelförmigen Aufbau (20) mit dem Gestell (15) verbunden sind, der sich vor dem Rahmen (1) erstreckt, mit letzterem durch ein Gelenk um eine Quer- und Horizontalachse (21) verbunden ist, wobei dieser Bügel selbst über mindestens einen Zylinder (22) mit dem Rahmen verbunden ist, der es erlaubt, den Erntekopf beliebig zu bedienen.

## Claims

1. A machine for harvesting lettuces, comprising a carrier chassis provided with guiding and/or propulsion wheels, which chassis (1) is provided with belt type means (13) or other for manual trimming or placing cut lettuces into containers, which chassis supports, at its front section, a harvesting head which comprises :
- means for cutting lettuce plants at their collar,
- means for lifting and conveying said cut lettuces, towards said trimming belt (13) or other,
- means for adjusting globally the position of said cutting means with respect to the ground, which adjustment means comprise - sensors (25) situated on either side of said harvesting head near the cutting means and - control means associated with said adjustment means,
**characterised in that** the cutting means are made of cutting members (9) arranged side by side, intended to be matched with the rows of lettuces, which cutting members are on the one hand provided with a regular back and forth transversal motion by suitable means and, on the other hand, for a portion of at least two of them, provided with means (43) for individual adjustment of their position in height with respect to the ground, in order to adapt this position in relation to the surface condition of the growing board.

2. A machine for harvesting lettuces according to claim 1, **characterised in that** the cutting members (9) are carried by a beam (33) arranged transversally and provided with means to enable on the one hand, the spacing adjustment of said members (9) relative to one another, and on the other hand, a pivoting motion of said members around the axis of said beam, under the effect of the position adjustment means of each of them.

3. A machine for harvesting lettuces according to claim 2, **characterised in that** the adjustment means of the cutting members (9) are made of remotely controllable actuators, such as jacks (43), whereas each jack enables displacement in height of a rail (42) which is arranged parallel behind the beam (33), which rail acts as a guide for a roller (41) or other, provided at the rear end of an arm (40) forming the cutting member (9), which roller is held elastically in contact with its rail (42).

4. A machine for harvesting lettuces according to claim 3, **characterised in that** the different jacks (43) are controllable either individually remotely by means of a manual control available to the operator, or an automatic control, or together by a single control available to said operator.

5. A harvesting machine according to any one of claims 1 to 4, **characterised in that** the lifting means of the cut lettuces are made of a pair of bar-type endless belts (10, 11) which delineate a funnel (12) to convey said lettuces, which funnel is quite tilted, forming an angle in the order of 60° in relation to the ground.

6. A machine for harvesting lettuces according to claim 5, **characterised in that** the upstream conveyor belt (11) is supported and suspended elastically not to harm or damage the cut lettuces.

7. A machine for harvesting lettuces according to claim 6, **characterised in that** the upstream belt (11) comprises bars coated with foam and in particular with foam sleeves made of material such as cellular rubber or other.

8. A harvesting machine according to any one of claims 1 to 7, **characterised in that** the cutting members (9) and the conveying funnel are arranged on a frame (15) which is connected to the chassis (1) by three points arranged according to a substantially horizontal triangle: - a ball-joint type anchoring point (17) on said chassis (1), and two lateral points (24) situated upstream of the ball-joint anchor, at the level of which the position of said cutting members (9) relative to the ground is adjusted, under the effect of suitable jacks (23).

9. A machine for harvesting lettuces, according to claim 8, **characterised in that** the adjustment jacks (23) are connected to the frame (15) by means of a structure (20) in the form of a fitting extending at the front of the chassis (1), hinged on said chassis around a transversal and horizontal axis (21), which fitting is itself connected to the chassis by means of at least one jack (22) which enables to operate the harvesting head at will.
